# EUROPÄISCHE PATENTSCHRIFT

(11) **EP 1 055 044 B1**
(45) Veröffentlichungstag und Bekanntmachung des Hinweises auf die Patenterteilung: **06.02.2002**
(21) Anmeldenummer: 99914398.5
(22) Anmeldetag: 03.02.1999
(51) Int. Cl.: E05B 49/00, E05B 17/22

(54) **VORRICHTUNG ZUM AUSLÖSEN EINER BERECHTIGUNGSABFRAGE FÜR EIN FAHRZEUG**
DEVICE FOR INITIATING AN AUTHORISATION REQUEST FOR A VEHICLE
DISPOSITIF SERVANT A DECLENCHER UNE DEMANDE D'AUTORISATION POUR UN VEHICULE

(30) Priorität: 12.02.1998 DE 19805659
(43) Veröffentlichungstag der Anmeldung: 29.11.2000
(73) Patentinhaber: ROBERT BOSCH GMBH, 70442 Stuttgart (DE)
(72) Erfinder: HAULER, Peter, D-76275 Ettlingen (DE)
(86) Internationale Anmeldenummer: DE9900279
(87) Internationale Veröffentlichungsnummer: WO9941475

(56) Entgegenhaltungen:
- EP-A- 0 153 467
- EP-A- 0 346 317
- WO-A-98/04799
- DE-A- 19 633 894
- DE-B- 1 018 746
- FR-A- 2 589 187

## Beschreibung

### Stand der Technik

Die Erfindung geht aus von einer Vorrichtung zum Auslösen einer Berechtigungsabfrage für ein Fahrzeug nach der Gattung des unabhängigen Anspruchs. Aus der EP-A 218 251 ist eine Sicherheitseinrichtung für Kraftfahrzeuge bekannt. Ein am Kraftfahrzeug installierter stationärer Transponder erzeugt ein Fragecodesignal aufgrund eines Schaltsignals, das mit Hilfe eines manuell betätigbaren Schalters erzeugt wird. Ein tragbarer Transponder empfängt das Fragecodesignal und sendet daraufhin ein Antwortcodesignal aus. Bei Übereinstimmung des Antwortcodesignals mit einem erwarteten Codesignal kann die Entriegelung des Kraftfahrzeugs herbeigeführt werden. Der Schalter wird durch den Türgriff des Kraftfahrzeugs betätigt.

### Vorteile der Erfindung

Die erfindungsgemäße Vorrichtung zum Auslösen einer Berechtigungsabfrage für ein Fahrzeug weist ein erstes Schaltmittel auf, bei dessen Betätigung eine Berechtigungsabfrage ausgelöst wird. Das erste Schaltmittel ist in einem Türgriff des Fahrzeugs angeordnet. Die erfindungsgemäße Vorrichtung zeichnet sich zudem dadurch aus, daß in dem Türgriff eine Vertiefung vorgesehen ist, die eine Schaltfläche des ersten Schaltmittels aufnimmt. Zur Auslösung der Berechtigungsabfrage ist es nicht notwendig, einen Schalter in der Karosserie beziehungsweise der Fahrzeugtür einzubauen. Erfindungsgemäß ist der Auslösemechanismus im Türgriff integriert. Dank der vertieften Unterbringung ist das Schaltmittel weitgehend geschützt gegen Umwelteinflüsse wie beispielsweise Einfrieren oder mutwillige Beschädigungen. Zudem bietet die erfindungsgemäße Vorrichtung erhöhten Schutz gegenüber unbeabsichtigter und versehentlicher Schalterbetätigung zur Auslösung der Berechtigungsabfrage, da die gegenüber der Türgriffoberfläche vertiefte Unterbringung des Schaltmittels nur bei gezielter Bedienung eine Schaltfunktion auslöst. Die Auslösung der Berechtigungsabfrage ist auch bei feststehenden Türgriffen möglich.

In einer zweckmäßigen Weiterbildung ist die Vertiefung auf der dem Fahrzeug abgewandten Seite angeordnet. Das erste Schaltmittel löst eine Berechtigungsabfrage zum Verriegeln des Fahrzeugs aus. Der Benutzer muß das erste Schaltmittel in Richtung zum Fahrzeug betätigen, um eine Verriegelung herbeizuführen. Diese Bewegungsrichtung entspricht derjenigen beim Schließen der Fahrzeugtür. Zum Öffnen der Fahrzeugtür hingegen wird in der Regel die dem Fahrzeug zugewandte Seite des Türgriffs verwendet. Somit ist die Wahrscheinlichkeit, beim Öffnen der Fahrzeugtür den Verriegelungsschalter versehentlich zu betätigen, bei der gewählten konstruktiven Gestaltung des Türgriffes relativ gering.

Eine weitere Ausgestaltung sieht ein zweites Schaltmittel vor, bei dessen Betätigung eine Berechtigungsabfrage zum Entriegeln des Fahrzeugs ausgelöst wird. Hierfür ist eine weitere Vertiefung im Türgriff integriert, die eine Schaltfläche des zweiten Schaltmittels aufnimmt. Diese Schaltfläche des zweiten Schaltmittels ragt im unbetätigten Zustand gegenüber der Oberfläche des Türgriffes heraus. Sie ist auf der dem Fahrzeug zugewandten Seite des Türgriffes angeordnet. Mit dem Ziehen am Türgriff und der Betätigung der Schaltfläche in gleicher Richtung wird die Entriegelungsabfrage gestartet. Diese Betätigung des Schalters entspricht dem beim Türöffnungsvorgang gewohnten Bewegungsablauf.

Als Schaltmittel kommen vorzugsweise magnetische Schalter, wie beispielsweise Reed-Schalter, zur Anwendung. Diese besitzen den Vorteil, keinen Ruhestrom zu benötigen. Der den Reed-Kontakt auslösende Permamentmagnet ist vorzugsweise in der Schaltfläche des Schaltmittels angeordnet.

Weitere zweckmäßige Ausgestaltungen ergeben sich aus weiteren abhängigen Ansprüchen und aus der Beschreibung.

### Zeichnung

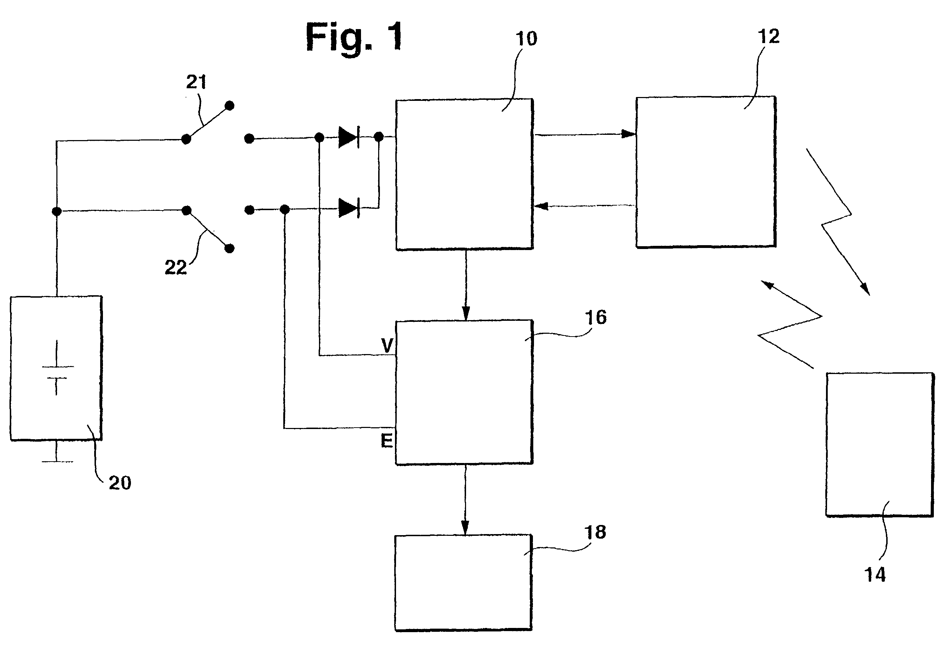

Ausführungsbeispiele sind in der Zeichnung dargestellt und in der nachfolgenden Beschreibung näher erläutert. Es zeigen die Figur 1 ein Blockschaltbild und die Figuren 2 sowie 3 mögliche konstruktive Ausgestaltungen einer erfindungsgemäßen Vorrichtung.

### Beschreibung der Ausführungsbeispiele

Eine Energieversorgung 20 speist ein erstes Schaltmittel 21 und ein zweites Schaltmittel 22. Deren Ausgangssignale werden über Dioden eingekoppelt und einer Berechtigungsabfrage 10 zugeführt. Die Berechtigungsabfrage 10 tauscht Signale mit einem Sende-/Empfangsteil 12 aus, das drahtlos mit einem Transponder 14 kommuniziert. Einer Türschloßelektronik 16 sind die Ausgangssignale der Schaltmittel 21, 22 und ein Ausgangssignal der Berechtigungsabfrage 10 zugeführt. Die Türschloßelektronik 16 generiert ein Ansteuersignal für ein Schloß 18.

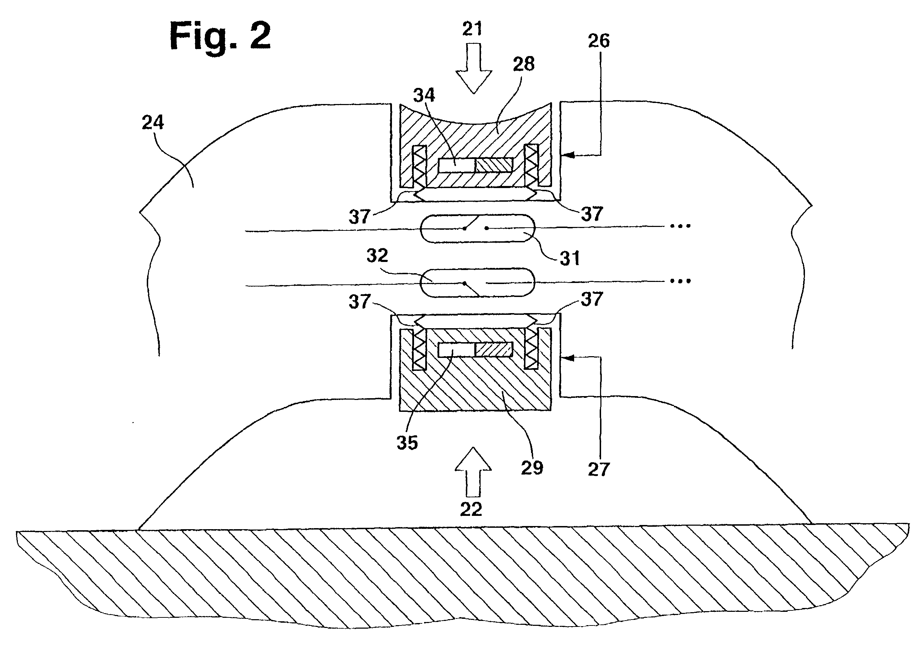

Figur 2 zeigt einen Schnitt durch einen Türgriff 24 in der Draufsicht. Die fahrzeugabgewandte Seite des Türgriffs 24 weist eine rechteckförmige erste Vertiefung 26 auf. In der ersten Vertiefung 26 ist eine erste Schaltfläche 28 untergebracht, die durch Federn 37 gegenüber dem Türgriff 24 beweglich gelagert ist. Die erste Schaltfläche 28 ist gegenüber der Oberfläche des Türgriffs 24 im unbetätigten Zustand leicht vertieft angeordnet. Sie weist einen ersten Permanentmagneten 34 auf, der bei hinreichender räumlicher Nähe einen ersten Reed-Kontakt 31 betätigt. Diese Anordnung bildet das erste Schaltmittel 21. Auf der dem Fahrzeug zugewandten Seite des Türgriffs 24 befindet sich eine rechteckförmige zweite Vertiefung 27, die eine zweite Schaltfläche 29 aufnimmt. Sie enthält einen zweiten Permanentmagneten 35 und ist mittels Federn 37 gegenüber dem Türgriff 24 beweglich gelagert. Die zweite Schaltfläche 29 ragt jedoch in Fahrzeugrichtung gegenüber der Oberfläche des Türgriffs 24 heraus. Durch Drücken der zweiten Schaltfläche 29 wird ein zweiter Reed-Kontakt 32 geschlossen. Die zuletzt geschilderte Anordnung bildet das zweite Schaltmittel 22. Die Pfeile zeigen die Betätigungsrichtung der beiden Schaltmittel 21, 22 an, die zu einer Auslösung der Berechtigungsabfrage 10 zum Ver- bzw. Entriegeln der Tür oder unmittelbar zum Öffnen einer bereits entriegelten Tür - unter Umgehung der Berechtigungsabfrage 10 - führen.

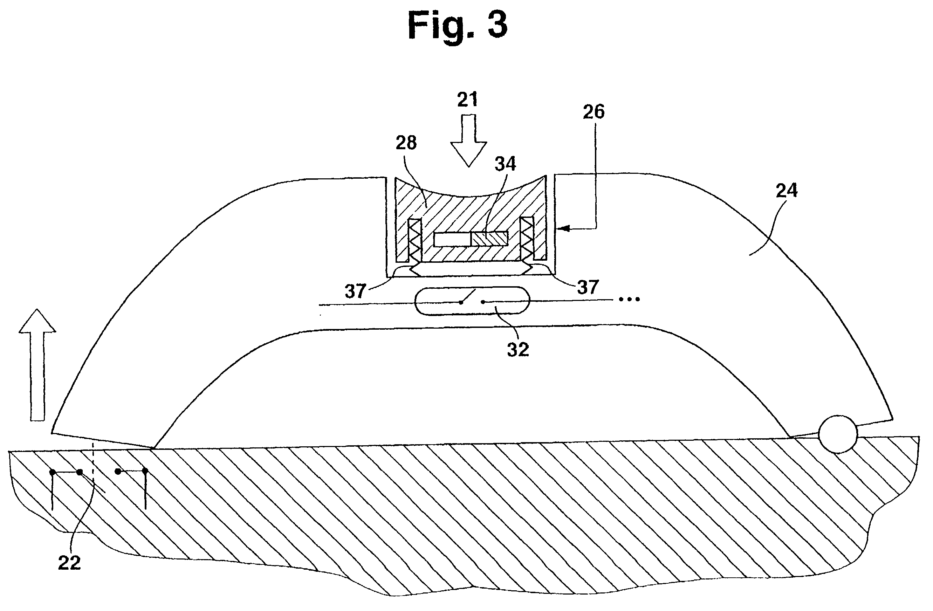

Das Ausführungsbeispiel gemäß Figur 3 weist im Türgriff 24 lediglich das erste Schaltmittel 21 auf, dessen Aufbau identisch zu dem in Figur 2 beschriebenen ist. Der Türgriff 24 ist einseitig drehbar gelagert. Bei Betätigung des Türgriffs 24 wird das in der Fahrzeugkarosserie angeordnete zweite Schaltmittel 22 beeinflußt.

Bei Betätigung des ersten Schaltmittels 21 wird ein Verriegelungs- oder Sicherungsvorgang, bei Betätigung des zweiten Schaltmittels 22 ein Entriegelungs- beziehungsweise Öffnungsvorgang des Fahrzeugs ausgelöst. Nach dem Verlassen des Fahrzeugs möchte der Benutzer dieses verriegeln. Hierzu betätigt er das erste Schaltmittel 21 in seine Schließstellung. Dadurch wird die Berechtigungsabfrage 10 an die Versorgungsspannung gelegt. Dieser Signalwechsel wird im Sinne eines gewünschten Starts der Berechtigungsabfrage 10 interpretiert. Anhand der Datenkommunikation zwischen Sende/Empfangsteil 12 und Transponder 14 wird erkannt, ob der das erste Schaltmittel 21 betätigende Fahrzeugbenutzer auch tatsächlich berechtigt ist, einen Verriegelungsvorgang herbeizuführen. Hierfür verwendete Identifikationsprozeduren greifen beispielsweise auf das sogenannte Rolling-Code-Verfahren oder das sogenannte Challenge-Response-Verfahren zurück. Hierzu steuert die Berechtigungsabfrage 10 das Sende/Empfangsteil 12 im Sinne eines Aussendens eines Fragesignals an. Der Transponder 14 empfängt dieses Fragesignal und ermittelt hieraus das zugehörige Antwortsignal, das er an das Sende- /Empfangsteil 12 zurücksendet. Die Berechtigungsabfrage 10 vergleicht das eingegangene Antwortsignal mit einem erwarteten Sollsignal. Bei Übereinstimmung erkennt die Berechtigungsabfrage 10 den Transponder 14 als berechtigt, eine Verriegelung durchzuführen. Eine analoge Identifikationsprozedur läuft beim Entriegeln des Fahrzeugs ab.

Die Schloßelektronik 16 generiert die entsprechenden Schließ-Signale für das Schloß 18, wenn der Transponder 14 als berechtigt erkannt wurde.

In entsprechender Weise wird auch bei einem gewünschten Entriegeln und/oder Öffnen des Fahrzeugs vorgegangen. Über das Schließen des zweiten Schalters 22 wird wiederum die Berechtigungsabfrage 10 gestartet. Bei einem berechtigten Transponder 14 generiert die Schloßelektronik 16 die entsprechenden Ansteuersignale zur Einleitung eines Entriegelungsund/oder Öffnungsvorganges des Schlosses 18 bzw. der Schließanlage des Fahrzeugs. Gemäß dem Ausführungsbeispiel nach Figur 2 sind die beiden Schaltmittel 21, 22 als Reed-Schalter ausgeführt. An der fahrzeugabgewandten Seite des Türgriffs 24 ist eine erste Aussparung 26 vorgesehen, die die erste Schaltfläche 28 aufnimmt. Die Oberfläche der ersten Schaltfläche 28 ist gegenüber der umgebenden Oberfläche des Türgriffs 24 in unbetätigtem Zustand leicht nach innen versetzt angeordnet. Dadurch kann das Risiko einer unbeabsichtigten Auslösung eines Verriegelungsvorgangs durch versehentliche Berührung der ersten Schaltfläche 28 verringert werden. Durch eine Betätigung der ersten Schaltfläche 28 in Richtung zum Fahrzeug wird der erste Reed-Kontakt 31 durch die Annäherung des ersten Permanentmagneten 34 geschlossen. Der bereits beschriebene Verriegelungsvorgang folgt. Nach Betätigung der ersten Schaltfläche 28 bewegen die Federn 37 diese wieder in die Ausgangslage zurück.

Das der Auslösung des Entriegelungs- und/oder Öffnungsvorgangs dienende zweite Schaltmittel 22 ist an der Innenseite des Türgriffs 24 auf der fahrzeugzugewandten Seite angeordnet. Die zweite Vertiefung 27 nimmt die zweite Schaltfläche 29, die identisch zur ersten Schaltfläche 28 aufgebaut ist, auf. Im Ruhezustand jedoch ragt die zweite Schaltfläche 29 gegenüber der Oberfläche des Türgriffs 24 zum Fahrzeug hin heraus. Durch eine Betätigung der zweiten Schaltfläche 29 in fahrzeugabgewandter Richtung wird der zweite Reed-Kontakt 32 geschlossen. In bereits beschriebener Weise wird die Entriegelungs- und/oder Öffnungsprozedur eingeleitet. Bei dem Ausführungsbeispiel gemäß Figur 2 ist der Türgriff 24 feststehend angeordnet. Eine mechanische Betätigung der Schließfalle ist dadurch nicht möglich.

Das Fahrzeug befindet sich im entriegelten Zustand, wenn die Berechtigungsabfrage 10 erfolgreich durchlaufen wurde. Betätigt der Benutzter das zweite Schaltmittel 22 im entriegelten Zustand ein weiteres Mal, wird die Berechtigungsabfrage 10 nicht noch ein weiteres Mal gestartet, sondern unter Umgehung der Berechtigungsabfrage 10 der sofortige Öffnungsvorgang der Tür ausgelöst.

Der Türgriff 24 des Ausführungsbeispiels gemäß Figur 3 ist dagegen beweglich gelagert. Das erste Schaltmittel 21 dient der Einleitung eines Vernegelungsvorgangs und stimmt mit dem erscen Schaltmittel 21 nach Figur 2 überein. Das zweite Schaltmittel 22 jedoch befindet sich in der Karosserie bzw. Tür des Fahrzeugs. Bei einer Betätigung des Türgriffs 24 in fahrzeugabgewandter Richtung wird das zweite Schaltmittel 22 geschlossen und löst dadurch den bereits beschriebenen Entriegelungs- und/oder Öffnungsvorgang aus. Mit dem Ziehen des Türgriffs 24 wird neben der Betätigung des zweiten Schaltmittel 22 auch über die mechanische Kopplung die Drehfalle des Türschlosses zum Öffnen der Tür bewegt.

Als Schaltmittel 21, 22 sind vorzugsweise solche Schalter zu verwenden, die gar keinen oder nur einen geringen Ruhestrom aufweisen. Es bietet sich zwar ein Reed-Schalter an, ebenso denkbar wären jedoch auch kapazitive, mechanische (Mikroschalter), magnetische (Hall) Schalter.

Um bei wiederholter Betätigung der Schaltmittel 21, 22 ein Entladen der Fahrzeugbatterie zu verhindern, kann die Berechtigungsabfrage 10 einen Zähler aufweisen, der mit einem Grenzwert verglichen wird. Ein Überschreiten des Grenzwerts führt dazu, daß weitere Berechtigungsabfragen 10 nicht mehr ausgeführt werden.

Die erfindungsgemäße Vorrichtung findet bevorzugte Verwendung bei schlüssellosen Zugangssystemen für Fahrzeuge. Sie ist jedoch hierauf nicht eingeschränkt.

## Patentansprüche

1. Vorrichtung zum Auslösen einer Berechtigungsabfrage für ein Fahrzeug, mit einem ersten Schaltmittel (21), bei dessen Betätigung eine Berechtigungsabfrage (10) ausgelöst wird, wobei das erste Schaltmittel (21) in einem Türgriff (24) des Fahrzeugs angeordnet ist, dadurch gekennezeichnet, daß in dem Türgriff (24) eine Vertiefung (26, 27) vorgesehen ist, die eine Schaltfläche (28, 29) des ersten Schaltmittels (21) aufnimmt.

2. Vorrichtung nach Anspruch 1, **dadurch gekennzeichnet, daß** die Vertiefung (26) auf der dem Fahrzeug abgewandten Seite angeordnet ist.

3. Vorrichtung nach einem der vorhergehenden Ansprüche, **dadurch gekennzeichnet, daß** durch das erste Schaltmittel (21) eine Berechtigungsabfrage (10) zum Verriegeln des Fahrzeugs auslöst wird.

4. Vorrichtung nach einem der vorhergehenden Ansprüche, **dadurch gekennzeichnet, daß** ein zweites Schaltmittel (22) vorgesehen ist, bei dessen Betätigung eine Berechtigungsabfrage (10) zum Entriegeln des Fahrzeugs ausgelöst wird.

5. Vorrichtung nach einem der vorhergehenden Ansprüche, **dadurch gekennzeichnet, daß** die Schaltfläche (28) im unbetätigten Zustand gegenüber der Oberfläche des Türgriffs vertieft angeordnet ist.

6. Vorrichtung nach Anspruch 4 oder 5 **dadurch gekennzeichnet, daß** auf der dem Fahrzeug zugewandten Seite des Türgriffs (24) eine weitere Vertiefung (27) vorgesehen ist, die eine zweite Schaltfläche (29) des zweiten Schaltmittels (22) aufnimmt.

7. Vorrichtung nach Anspruch, **dadurch gekennzeichnet, daß** die zweite Schaltfläche (29) in unbetätigtem Zustand gegenüber der Oberfläche des Türgriffs (24) herausragt.

8. Vorrichtung nach einem der vorhergehenden Ansprüche, **dadurch gekennzeichnet, daß** als Schaltmittel (21, 22) ein magnetischer - vorzugsweise ein Reed-Schalter - , kapazitiver oder mechanischer Schalter vorgesehen ist.

9. Vorrichtung nach einem der vorhergehenden Ansprüche, **dadurch gekennzeichnet, daß** ein Permanentmagnet (34, 35) des magnetischen Schalters (21, 22) in der gegenüber dem Türgriff (24) bewegbaren Schaltfläche (28, 29) angeordnet ist.

10. Vorrichtung nach einem der vorhergehenden Ansprüche 4 bis 9, **dadurch gekennzeichnet, daß** mit einer Bewegung des Türgriffs (24) das zweite Schaltmittel (22) betätigt wird.

11. Vorrichtung nach einem der vorhergehenden Ansprüche 1 bis 3, **dadurch gekennzeichnet, daß** bei Betätigung eines zweiten Schaltmittels (22) ein Schloß (18) unter Umgehung der Berechtigungsabfrage (10) angesteuert wird.

## Claims

1. Apparatus for initiating an authorization check for a vehicle, having a first switching means (21) on whose operation an authorization check (10) is initiated, with the first switching means (21) being arranged in a door handle (24) of the vehicle, **characterized in that** a depression (26, 27) is provided in the door handle (24) and accommodates a switching surface (28, 29) of the first switching means (21).

2. Apparatus according to Claim 1, **characterized in that** the depression (26) is arranged on the side facing away from the vehicle.

3. Apparatus according to one of the preceding claims, **characterized in that** the first switching means (21) initiates an authorization check (10) for locking the vehicle.

4. Apparatus according to one of the preceding claims, **characterized in that** a second switching means (22) is provided, on whose operation an authorization check (10) for unlocking the vehicle is initiated.

5. Apparatus according to one of the preceding claims, **characterized in that**, when not operated, the switching surface (28) is arranged such that it is recessed with respect to the surface of the door handle.

6. Apparatus according to Claim 4 or 5, **characterized in that** a further depression (27) is provided on the side of the door handle (24) facing the vehicle and accommodates a second switching surface (29) of the second switching means (22).

7. Apparatus according to Claim [lacuna], **characterized in that**, when not operated, the second switching surface (29) projects from the surface of the door handle (24).

8. Apparatus according to one of the preceding claims, **characterized in that** a magnetic-preferably a reed switch - capacitive or mechanical switch is provided as the switching means (21, 22).

9. Apparatus according to one of the preceding claims, **characterized in that** a permanent magnet (34, 35) of the magnetic switch (21, 22) is arranged in the switching surface (28,29), which can move with respect to the door handle (24).

10. Apparatus according to one of the preceding claims 4 to [lacuna], **characterized in that** the second switching means (22) is operated by movement of the door handle (24).

11. Apparatus according to one of the preceding claims 1 to [lacuna], **characterized in that** a lock (18) bypassing the authorization check (10) is actuated on operation of a second switching means (22).

## Revendications

1. Dispositif pour déclencher une demande d'autorisation pour un véhicule, comprenant
un premier moyen de commutation (21) dont l'actionnement déclenche une demande d'autorisation (10),
ce premier moyen de commutation (21) étant prévu dans une poignée de porte (24) du véhicule,
**caractérisé en ce que**
la poignée de porte (24) comporte une cavité (26, 27) qui reçoit une surface de commutation (28, 29) du premier moyen de commutation (21).

2. Dispositif selon la revendication 1,
**caractérisé en ce que**
la cavité (26) est prévue sur le côté opposé au véhicule.

3. Dispositif selon l'une quelconque des revendications précédentes,
**caractérisé en ce que**
le premier moyen de commutation (21) déclenche une demande d'autorisation (10) pour verrouiller le véhicule.

4. Dispositif selon l'une quelconque des revendications précédentes,
**caractérisé par**
un second moyen de commutation (22) dont l'actionnement déclenche une demande d'autorisation (10) pour déverrouiller le véhicule.

5. Dispositif selon l'une quelconque des revendications précédentes,
**caractérisé en ce que**
la surface de commutation (28) est enfoncée par rapport à la surface de la poignée lorsque cette surface n'est pas actionnée.

6. Dispositif selon la revendication 4,
**caractérisé en ce que**
le côté de la poignée (24) non tourné vers le véhicule comporte une autre cavité (27) recevant une seconde surface de commutation (29) du second moyen de commutation (22).

7. Dispositif selon l'une quelconque des revendications précédentes,
**caractérisé en ce que**
la seconde surface de commutation (29) dépasse de la surface de la poignée de porte (24) lorsqu'elle n'est pas actionnée.

8. Dispositif selon l'une quelconque des revendications précédentes,
**caractérisé en ce que**
le moyen de commutation (21, 22) est un commutateur magnétique, de préférence un commutateur à lamelles, un commutateur capacitif ou un commutateur mécanique.

9. Dispositif selon l'une quelconque des revendications précédentes,
**caractérisé en ce qu'**
un aimant permanent (34, 35) du commutateur magnétique (21, 22) est prévu dans la surface de commutation (28, 29) mobile par rapport à la poignée de porte (24).

10. Dispositif selon l'une quelconque des revendications 4 à 9,
**caractérisé en ce qu'**
un mouvement de la poignée de porte (24) actionne le second moyen de commutation (22).

11. Dispositif selon l'une quelconque des revendications 1 à 10,
**caractérisé en ce qu'**
un actionnement d'un second moyen de commutation (22) commande une serrure (18) en contournant la demande d'autorisation (10).
